Europäisches Patentamt

(19) European Patent Office

Office européen des brevets

(11) Publication number: **0 120 815**
**B1**

# (12) EUROPEAN PATENT SPECIFICATION

(45) Date of publication of patent specification: **02.12.87**

(21) Application number: **84830047.1**

(22) Date of filing: **27.02.84**

(51) Int. Cl.⁴: **F 16 K 27/04,** F 16 K 11/06, F 16 K 11/00

(54) A faucet structure, particularly of the single lever type.

(30) Priority: **02.03.83 IT 1985183**

(43) Date of publication of application:
**03.10.84 Bulletin 84/40**

(45) Publication of the grant of the patent:
**02.12.87 Bulletin 87/49**

(84) Designated Contracting States:
**AT BE CH DE FR GB LI NL SE**

(56) References cited:
**FR-A-2 364 393**
**FR-A-2 446 431**
**US-A-2 655 179**
**US-A-3 871 406**
**US-A-4 301 830**

(73) Proprietor: **MAMOLI ROBINETTERIA S.p.A.**
**Via Paleocapa 1**
**I-20100 Milano (IT)**

(72) Inventor: **Pesenti, Alessandro**
**Piazza S. Mamoli 1**
**I-20084-Lacchiarella Milano (IT)**

(74) Representative: **Cicogna, Franco**
**Ufficio Internazionale Brevetti Dott.Prof. Franco**
**Cicogna Via Visconti di Modrone, 14/A**
**I-20122 Milano (IT)**

Courier Press, Leamington Spa, England.

## Description

This invention relates to a faucet structure, particularly of the single lever type.

As is known, various types of single lever faucet are currently available commercially which use one control member for controlling the water delivery flow rate and mixing of hot and cold water.

Conventional single lever faucets usually include a plurality of constituent parts having a complex form and therefore the manufacture and consequent mounting and maintenance of prior art faucets are very complicated and expensive.

For example, the French Patent FR—A— 2,364,393 discloses a faucet spout comprising a base body, a cover member covering the base body, an integral spout proper and delivery pipe mounted in the cover member and terminating with a discharging port near one end of the cover member, as well as a fitting member between the pipe and said base body inside. Thus such a Patent, which specifically relates to a particular delivery spout structure, requires a large number of component parts. Hence the production and assembling costs are comparatively high. Moreover it does not address in any way the problem of properly arranging water filtering elements.

It is a primary object of this invention to obviate such prior disadvantages by providing a novel faucet structure, particularly of the single lever type, which is designed to include a small number of simple shape elements thereby facilitating the manufacturing, mounting and maintenance of the faucet.

It is another object of this invention to provide a faucet structure of the single lever type, which can be readily manufactured from commercially available elements and materials, while being quite competitive from the economical standpoint.

According to the invention, these and other objects, such as will be apparent hereinafter, are achieved by a faucet structure, particularly of the single lever type, according to the main Claim.

Further features and advantages of this invention will become apparent on considering the following description of a preferred, though not exclusive, embodiment of this single lever faucet structure, in conjunction with the accompanying illustrative drawings, where:

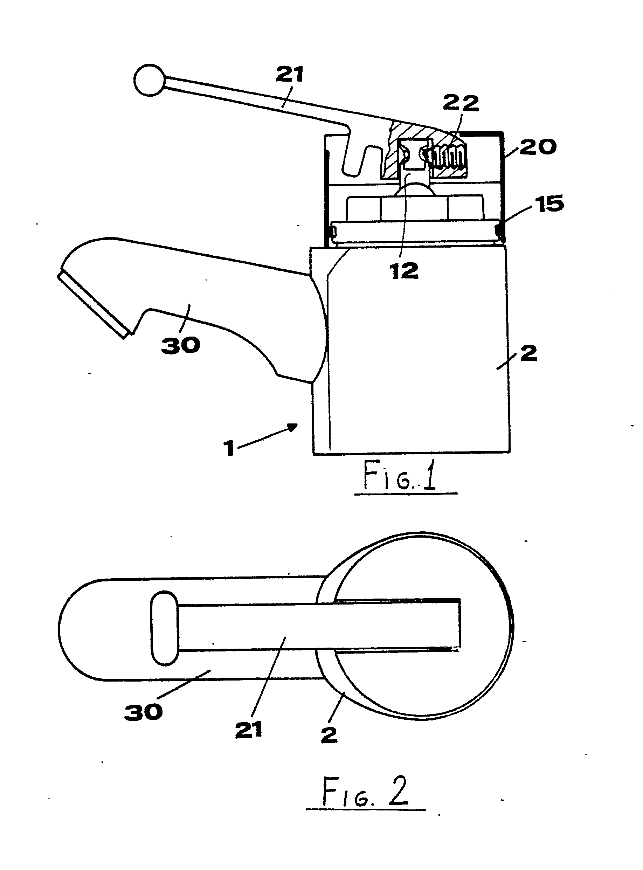

Figure 1 is a schematical side elevation view of one configuration of this faucet, shown partly in section;

Figure 2 is a top plan view of this faucet;

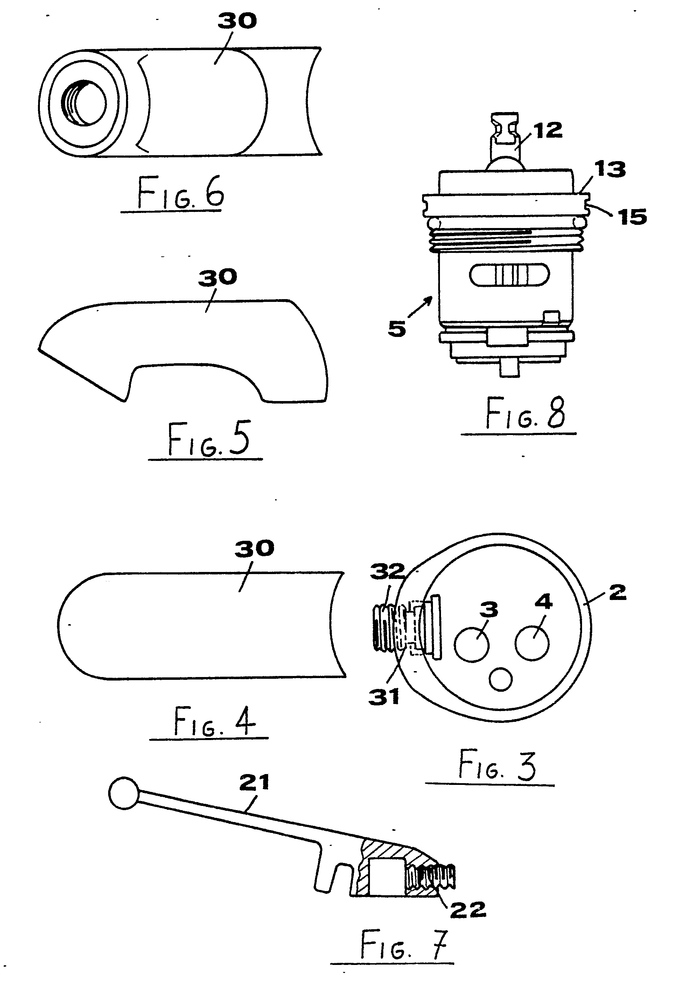

Figure 3 shows the body housing as viewed from above;

Figures 4, 5 and 6 are a top plan view, side elevation view, and a bottom view, respectively of a delivery spout for application to said body housing;

Figure 7 is a partly cut away view of an actuating lever:

Figure 8 is a side elevation view of the faucet actuating cartridge:

Figure 9 is an exploded view of the actuation cartridge, along with the water filter or strainer holder plate and related strainers, which may be manufactured separately or integrally with the strainer holder plate;

Figure 10 is an elevation view showing a body housing as made ready for a so-called "recessed" faucet design;

Figure 11 is a plan view of the body housing shown in Figure 10.

With particular reference to the numerals appearing in the drawing views, a single lever faucet structure according to the invention, as generally indicated at 1, uniquely comprises a single-piece body housing 2 having a substantially cylindrical overall shape and being formed at the bottom with a hole 3 in communication with a cold water delivery pipe, and with a hole 4 in communication with a hot water delivery pipe.

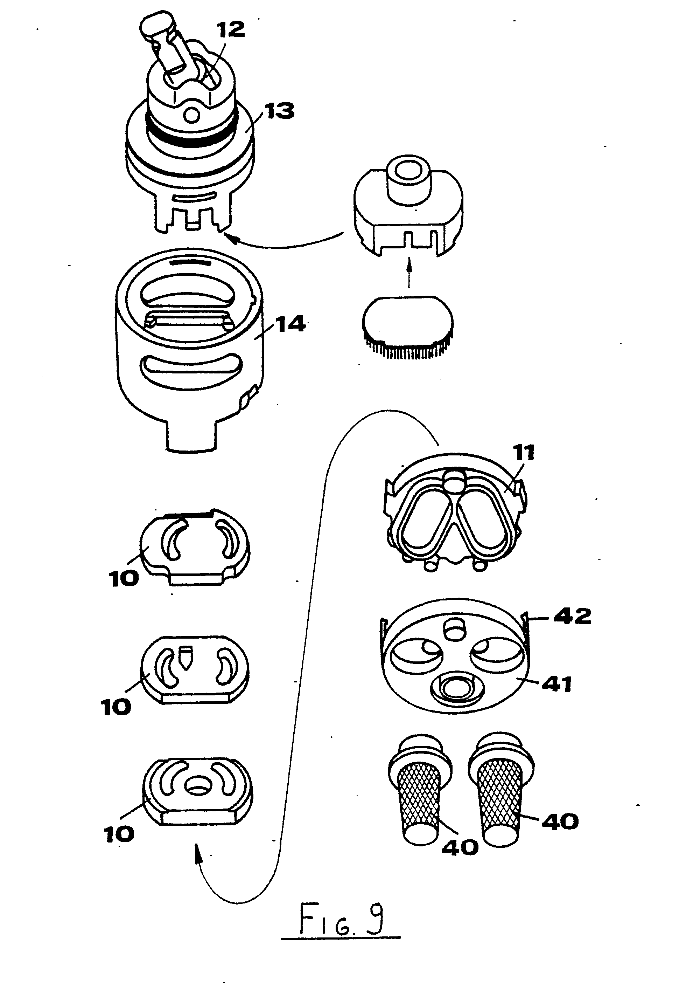

Into said body housing 2, an actuation cartridge may be introduced which is generally designated with the reference numeral 5 and, as shown in Figure 9, includes conventional sliding ceramic discs 10 arranged to move across a bottom body 11 which defines inlet ports, the ceramic discs 10 being caused to translate by means of an oscillating pin 12 connected to an upper element 13 associable with a valve body 14. The cartridge 5 is held in position by a screw nut 13 associable with the body housing 2. That same nut 13 is formed with an outer groove 15 at the edge thereof, so as to permit engagement by a protective cap 20 which has preferably a cylindrical configuration. To actuate the cartridge 5, there is provided an actuating lever 21 attachable to the oscillating pin 12, as by means of a set screw 22. An important feature of the invention is that the body housing has a substantially cylindrical shape and is made ready for connection to a single-piece delivery pipe or spout, indicated at 30, which is not an integral construction with the body housing itself. Thus, a single body housing may be provided, along with its respective cartridge, to fit a series of differently configured faucets.

This is accomplished quite simply by modifying the delivery spouts, or whatever else may be found appropriate, seeing that the body housing is made ready for application of a desired delivery spout thereto.

In order to secure the delivery spout 30 to the body housing 2, a lateral through hole 31 is provided which can receive a threaded bushing 32 for insertion in a corresponding threaded seating formed in the delivery spout.

Another important feature of the invention is that to protect the ceramic discs against sand, dust, and the like, strainers or filtering elements, indicated at 40, are provided which have a substantially frusto-conical shape and may be mounted directly on the bottom side of the actuation cartridge 5.

To make the connection, it may be convenient to use an intermediate disc 41, which would be secured with a snap-action effect to the valve body 14 by means of tabs 42.

Optionally and where feasible, the strainers 40 may be connected to the cartridge bottom and accommodated in holes provided directly in the body housing.

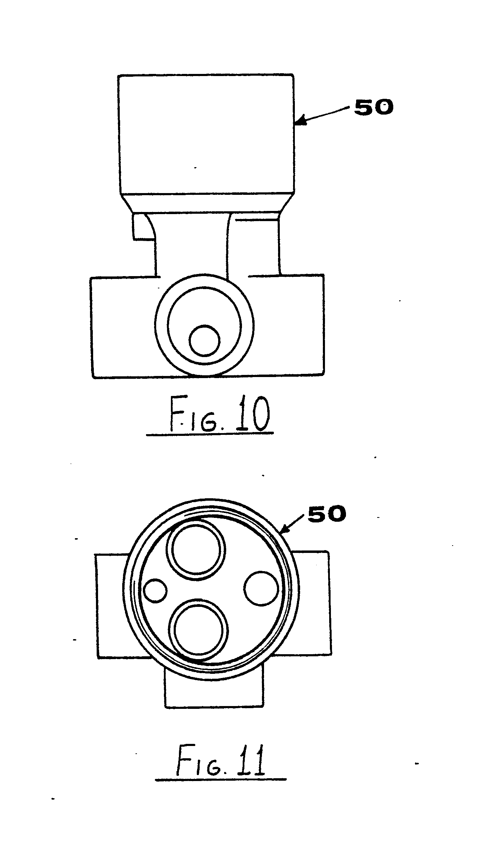

As shown in Figures 10 and 11, the same construction principles may be equally well applied to the instance of recess mounted bodies, indicated at 50, whereto, instead of a delivery spout, a simple delivery conduit is connected, as recessed in the wall, which conduit would be, in turn, communicated to the delivery spout proper.

However, this would be no departure from the inventive principle, in that there still is a cylindrical body housing which is made ready for application of the delivery conduit.

It may be appreciated from the foregoing description that the invention achieves its objects.

In particular, it should be pointed out that of considerable importance is the provision of a cylindrical body housing which enables the connection, by means of the bushing 32, of different delivery spouts thereto, without involving alteration of the whole faucet construction but rather using a standard body housing which comprises the body housing 2 and respective cartridge 5, while changed are the accessory elements which are applied thereafter.

Further, the insertion of the strainers 40 directly into the body housing, at the location of the actuation cartridge 5, affords the possibility of an easy and quick inspection of the strainers for servicing them at frequent intervals.

## Claims

1. A faucet structure, particularly of the single lever type, comprising a substantially cylindrical body housing (2) whereinto an actuation cartridge (5) may be inserted, said body housing being in communication with a cold water delivery pipe and hot water delivery pipe, characterized in that said body housing (2) has on the lateral surface thereof a through hole (31) for the insertion of a threaded bushing (32) engageable with a threaded seating defined at the end of a single piece delivery spout (30) to be screw applied to said body housing, in that said faucet comprises strainers (40) located at said cold water delivery pipe and hot water delivery pipe and associated with the bottom of said actuation cartridge (5), and in that said faucet comprises an intermediate disc (41) arranged for snap-action engagement, as by means of tabs (42) rigid with said disc (41), with the cartridge (5) and being adapted to serve as a supporting element for said strainers (40).

2. A faucet structure according to the preceding claim, characterized in that said strainers (40) are integral with said intermediate disc (41).

3. A faucet structure according to the preceding claims, characterized in that said strainers (40) are located inside the body housing (2).

4. A faucet structure according to one or more of the preceding claims, characterized in that said actuation cartridge (5) is held snugly in position within the body housing by means of a screw nut (13) which can be threaded onto said body housing (2).

5. A faucet structure according to one or more of the preceding claims, characterized in that said nut (13) is also formed with an outer groove (15) at the edge thereof, so as to permit engagement by a protective cap (20) which has preferably a cylindrical shape.

## Patentansprüche

1. Hahnstruktur, insbesondere der Einhebelart, mit einem im wesentlichen zylindrischen Aufnahmekörper (2), in welchen ein Betätigungseinsatz (5) eingefügt werden kann und welcher an ein Kaltwasser-Zuführungsrohr und an ein Heißwasser-Zuführungsrohr angeschlossen ist, dadurch gekennzeichnet, daß der Aufnahmekörper (2) an seiner seitlichen Oberfläche ein Durchgangsloch (31) zur Einsetzung einer Gewindebuchse (32) aufweist, die mit einem am Ende eines einteiligen, dem Aufnahmekörper anzuschraubenden Ausgußes (30) geformten Gewindesitz verbindbar ist, daß der Hahn bei dem Kaltwasser-Zuführungsrohr und bei dem Heißwasser-Zuführungsrohr angeordnete und dem Boden des Betätigungseinsatzes (5) zugeordnete Filter (40) aufweist, und daß der Hahn eine Zwischenscheibe (41) aufweist, welche zum Aufschnappeingreifen, z.B. mittels mit der Scheibe (41) fest verbundener Laschen (42), mit dem Einsatz geeignet ist und als Halteelement für die Filter (40) dient.

2. Hahnstruktur nach dem vorhergehenden Anspruch, dadurch gekennzeichnet, daß die Filter (40) einstückig mit der Zwischenscheibe (41) gebildet sind.

3. Hahnstruktur nach den vorhergehenden Ansprüchen, dadurch gekennzeichnet, daß die Filter (40) im Inneren des Aufnahmekörpers (2) angeordnet sind.

4. Hahnstruktur nach einem oder mehreren der vorhergehenden Ansprüche, dadurch gekennzeichnet, daß der Betätigungseinsatz (5) im Aufnahmekörper mittels einer auf dem Aufnahmekörper (2) aufschraubbaren Gewindemutter (13) lagebestimmt gehalten ist.

5. Hahnstruktur nach einem oder mehreren der vorhergehenden Ansprüche, dadurch gekennzeichnet, daß die Mutter (13) noch mit einer äußeren Nut (15) an ihrem Rand versehen ist, um dadurch ein Eingreifen von einer bevorzugt eine zylindrische Form aufweisende Schutzkappe (20) zu erlauben.

## Revendications

1. Construction de robinet, en particulier du type à levier unique, comprenante un logément de corps sensiblement cylindrique (2) dans lequel on peut introduire un cartouche d'actionnement (5), ledit logément de corps communiquant avec un tuyau de débitement d'eau froide et un tuyau de débitement d'eau chauffée, caractérisée en ce que ledit logément de corps (2) est pourvu, sur sa surface laterale, d'un trou passante (31) pour l'insertion d'une douille filetée (32) apte à être engagée avec un siège filété défini en correspondance de l'extrémité d'un bec de débitement en pièce unique (30) apte à être vissé sur ledit logément de corps, en ce que ledit robinet comprend des filtres (40) disposés en correspondance dudit tuyua de débitement d'eau froid et du dit tuyua de débitement d'eau chauffée et associé avec le fond de ladite cartouche d'actionnement (5), et en ce que ledit robinet comprend un disque intermédiaire (41) apte à être engagé par déclenchement, au moyen de languettes (42) solidaires dudit disque (41) avec la cartouche (5) et apte à fonctionner comme un élément support pour lesdits filtres.

2. Construction de robinet selon la revendication précédente, caractérisée en ce que lesdits filtres (40) sont formés intégraux avec ledit disque intermédiaire (41).

3. Construction de robinet selon les revendications précédentes, caractérisé en ce que lesdits filtres (40) sont disposés à l'intérieur du logément de corps (2).

4. Construction de robinet selon l'une ou plusieures des revendications précédentes, caractérisé en ce que ladite cartouche d'actionnement (5) est retenue d'une manière précise dans sa position à l'intérieur dudit logément de corps par un écrou filété (13) lequel peut être vissé sur ledit logément de corps (2).

5. Construction de robinet selon l'une ou plusieures des revendications précédentes, caractérisée en ce que ledit écrou (13) est également formé avec une gorge extérieure (15) en correspondance de son bord, de manière à être engagé par un couvercle de protection (20) ayant préférablement un forme cylindrique.

FiG. 1

FiG. 2

Fig. 6

Fig. 5

Fig. 8

Fig. 4

Fig. 3

Fig. 7

FIG. 9

F·ig. 10

Fig. 11